# EUROPEAN PATENT APPLICATION

(11) **EP 4 810 632 A1**
(43) Date of publication of application: **23.09.2026**
(21) Application number: 26162661.8
(22) Date of filing: 05.03.2026
(51) Int. Cl.: C22B 58/00, B01D 9/02, C22B 1/00, C22B 3/04, C22B 3/08, C22B 3/22, C22B 7/00, C22B 3/00, C22B 25/06, C25C 1/22

(54) **HYDROMETALLURGICAL PROCESS FOR THE SELECTIVE RECOVERY OF INDIUM**

(30) Priority: 20.03.2025 IT 202500005766
(71) Applicant: Smart Waste Engineering-Società a Responsabilità Limitata, 67100 L'Aquila (AQ) (IT); Universita' Degli Studi Dell'Aquila, 67100 L'Aquila (AQ) (IT)
(72) Inventor: IPPOLITO, Nicolò Maria, 00186 Roma (RM) (IT); VEGLIÒ, Francesco, 65010 Spoltore (PE) (IT); ZUEVA, Svetlana Borisovna, 64026 Roseto degli Abruzzi (TE) (IT); PELLEI, Giorgio, 63100 Ascoli Piceno (AP) (IT); PASSADORO, Marco, 67100 L'Aquila (AQ) (IT)
(74) Representative: Cavattoni, Raimondi & Luppi Srl

(57) **Abstract**

A hydrometallurgical process for the selective recovery of indium from a solid waste material comprises subjecting the solid waste material to acid leaching to dissolve the indium by using an aqueous solution of sulphuric acid (H₂SO₄) as a leaching solution. The acid leaching is carried out in a single stage or in multiple stages and is followed by filtering the exiting leaching solution and washing the residual solid material with water. The exiting leaching solution is subjected to electrolysis to recover the indium as metallic indium at the cathode and regenerate the sulphuric acid, recovering the leaching solution at the end of the electrolysis. The solid waste material derives from liquid crystal displays of devices such as televisions, monitors for computers, smartphones and infotainment units of motor vehicles.

## Description

The invention relates to a hydrometallurgical process for selectively recovering indium (In) from ITO (Indium-Tin-Oxide) glass of liquid crystal displays of end-of-life devices like televisions, monitors for computers, smartphones and infotainment units of motor vehicles.

Indium is a chemical element that has great importance for various industrial ecosystems. This metal is considered to be strategic because of the electric properties thereof and the versatility thereof. It is widely used in the electronics industry, in particular for producing liquid crystal displays and some typologies of photovoltaic panels. Owing to the high electric conductivity thereof, indium is a key component in welding alloys for electronic components, contributing to ensuring optimum performance in devices and efficient transmission of the signal.

Indium is crucial in the production of solar cells, in particular in CIGS cells (copper, indium, gallium and selenium), owing to the properties thereof that enable energy efficiency to be improved. It is used as indium tin oxide (ITO) for screens and display devices. It is also used in the semiconductors industry for advanced electronic components, thus demonstrating the importance thereof in numerous technical and industrial applications.

In a context of transition towards a circular economy, it is fundamental to implement strategies for recovering strategic raw materials from end-of-life products. Therefore, various methods have been developed in the last years for recovering indium from different types of industrial and electronic waste. This would enable dependency on mineral resources to be reduced, promoting sustainable management of the resources.

CN115418501A discloses a process for recovering the indium from ITO (Indium-Tin-Oxide) glass waste comprising the following steps: shattering the ITO glass, leaching the indium through a hydrofluoric acid solution, evaporating the obtained solution to obtain an indium concentrate and recover hydrofluoric acid, second leaching with sulphuric acid to further increase the recovery of indium from the residual ITO glass solid, adding a NaOH solution and adjusting the pH to 2.7 to precipitate the metal impurities, including tin and molybdenum, adding hydrochloric acid in the filtered solution and extracting indium by precipitation by addition of aluminium foil.

The disclosed process involves the use of several corrosive reactants even at high concentrations (e.g. H₂SO₄ 4 mol/L), being moreover costly because of the numerous operations of which the process consists. The method also involves an evaporation step that causes a great energy consumption with respect to the operations generally used in hydrometallurgical processes.

CN107513619A discloses a process for recovering the indium from ITO (Indium-Tin-Oxide) glass waste through the following steps: leaching of the ITO glass powder in an HCl, HNO₃ and H₂O₂ solution, liquid-liquid extraction with bis (2-ethyl hexyl) phosphate in kerosene, stripping with hydrochloric acid, electrolysis.

Also in this process corrosive reactants are used, in addition to liquid-liquid extraction that makes the process costlier from the management point of view.

Also the process proposed by CN109517991A uses a liquid-liquid extraction to obtain a selective recovery of the indium. Such operation entails an increase in operating costs, in addition to questions connected to dangerousness, in view of the high flammability of some of the solvents used.

CN108277354A discloses a method for leaching the indium through a low-concentration (0.05 - 0.8 M) oxalic acid solution at high temperature (40-90 °C), but there is no information on subsequent recovery of the indium from the solution.

Accordingly, the need for a process for the selective recovery of the indium from waste materials, such as for example ITO (Indium-Tin-Oxide) glass deriving from end-of-life liquid crystal displays and other industrial waste, which process enables the drawbacks disclosed above to be overcome, is strongly felt by the skilled persons.

### Objects of the invention

An object of the invention is to improve known hydrometallurgical processes for recovering selectively the indium from waste materials.

Another object of the invention is to provide a hydrometallurgical process for recovering selectively the indium from waste materials, in particular liquid crystal displays of several devices, which process enables the recovery yield to be maximized and a high purity product to be obtained that can be easily reintroduced into the market.

A further object is to provide a hydrometallurgical process for recovering selectively the indium from waste materials, in particular liquid crystal displays of several devices, which process enables the amounts of reagents to be used and the operational costs to be reduced significantly.

Still another object is to provide a hydrometallurgical process for recovering selectively the indium from waste materials, in particular liquid crystal displays of several devices, which process enables the water consumption and the production of waste water to be minimized.

### Short description of the invention

According to the invention, a hydrometallurgical process for recovering selectively the indium from waste materials is provided, as defined in claim 1.

Owing to the invention, a process is made available for recovering selectively the indium from ITO (Indium-Tin-Oxide) glass of liquid crystal displays of end-of-life devices like TVs, monitors for computers, smartphones and infotainment units of the motor vehicles, which process enables the drawbacks of the known processes to be overcome.

The process according to the invention is based on the so-called "Minimum-Liquid Discharge" (MLD) approach, providing for the recycling of a large part of the water used and a reduced production of waste to be disposed of.

Specifically, according to the present invention the selective recovery of the indium is obtainable through a selective leaching that is conducted at a low concentration of sulfuric acid (0.1 mol/L) and thus enables a product with high purity to be obtained. Moreover, by introducing a counter-current system for the leaching step, recirculations of solutions and a step (and corresponding unit) for the water treatment, there is a significant reduction in the consumption of fresh water and in the waste water generated by the hydrometallurgical process, according to an MLD (Minimal Liquid Discharge) approach.

Compared to known processes, the consumption of reagents is less (as it will be disclosed in detail below) since the process according to the invention exploits the low concentrations of sulphuric acid to solubilize exclusively the indium. Moreover, this reagent is also partially regenerated during the electrodeposition step that is used to obtain metallic indium.

### Short description of the drawings

The invention can be better understood and implemented with reference to the appended drawing that illustrates an embodiment thereof by way of non-limiting example, in which:

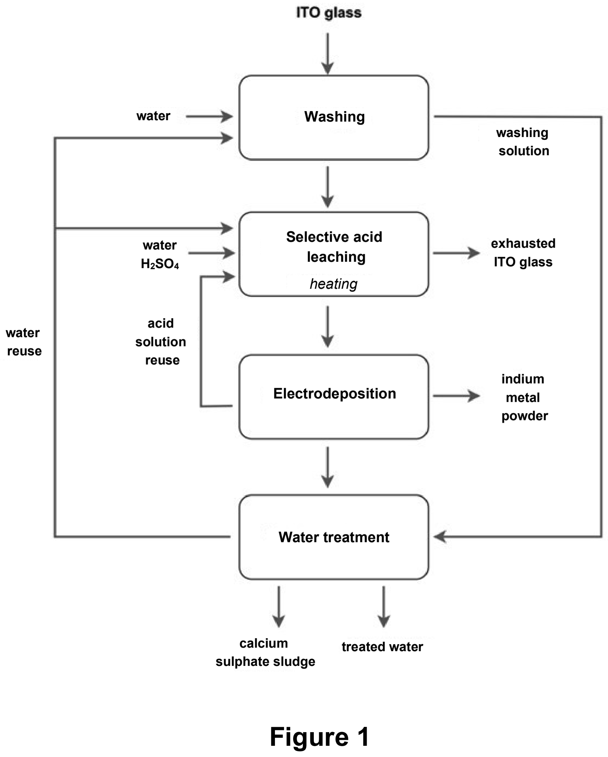

Figure 1 is a flow chart showing the main steps of the process according to the invention.

### Detailed description of the invention

In the present description and in the appended claims:
- the wordings "sulphuric acid" and "reagent" are considered to be synonyms and used in a mutually interchangeable manner;
- The wording "exiting leaching solution" indicates a leaching solution that has completed one or multiple leaching stages and can be subjected to further treatments, such as for example filtration and electrolysis;

The hydrometallurgical process according to the invention enables indium (In) to be recovered selectively from ITO (Indium-Tin-Oxide) glass of liquid crystal displays of end-of-life devices like TVs, monitors for computers, smartphones and infotainment units of the motor vehicles. The hydrometallurgical process according to the invention is substantially simple and enables high indium recovery yields to be obtained. The waste material to be treated is processed mechanically (shredding; milling) so as to be reduced dimensionally in a range comprised between 0.5 mm and 3 cm, namely the waste material is reduced into granules and/or powders.

In one embodiment, the process according to the invention comprises the following steps:
I) Washing the solid waste material with a washing liquid consisting of water or an organic solvent, for example acetone, in order to remove from the layer of ITO (Indium-Tin-Oxide) any residues of liquid crystals, so as to recover the latter suspended in the washing liquid;
II) Filtering the suspension obtained in the step I), with possible reuse of the washing liquid for at least five successive washing cycles;
III) Acid leaching of the solid material obtained from step I (namely ITO glass free of liquid crystal residues), or alternatively of the solid waste material not preliminarily subjected to washing and filtering, at a temperature of 40-90°C, in a single stage or in multiple cross-current or counter-current stages (when the acid leaching is conducted in multiple stages), by using a leaching solution consisting of an aqueous solution of sulphuric acid (H₂SO₄), so as to obtain the selective dissolution of the indium, followed by filtering the exiting leaching solution and washing the residual solid material with water;
IV) Electrolysis of the leaching solution exiting from step III to recover the metallic indium at the cathode and to regenerate the sulphuric acid, followed by recovery of the leaching solution at the end of electrolysis;
V) Reusing 50-80% of the leaching solution recovered at the end of step IV for the acid leaching treatment (according to step III) of a new solid material, adding from 10% to 50% of sulphuric acid compared to the initial dosage of the sulphuric acid in the leaching solution of step III or without any replenishment of sulphuric acid;
VI) Treating the residual leaching solution (after electrodeposition) recovered at the end of step IV (electrolysis) and/or the washing liquid recovered from step II (filtration of the suspension), when the washing liquid consists of water, in a neutralization process (pH 7-8.5), with subsequent possibility of reusing the water deriving from the aforesaid treatment for preparing a new leaching solution or as a washing water.

The adoption of a cross-current or counter-current leaching scheme according to step III enables water consumption and the quantity of reagents used in the hydrometallurgical method according to the invention to be reduced significantly, in addition to obtaining a more concentrated indium solution that enables energy consumption to be reduced in electrochemical recovery according to step IV.

Furthermore, the low concentration of sulphuric acid used in step III enables the indium to be recovered selectively without dissolving the tin, making the recovery of the indium easier in step IV and ensuring greater purity of the final product.

In one embodiment, the hydrometallurgical process according to the invention comprises only steps I to IV (washing, filtration, acid leaching and electrolysis).

In another embodiment, the hydrometallurgical process according to the invention comprises only steps III to V (acid leaching, electrolysis and partial reuse of the leaching solution recovered at the end of the electrolysis).

In a further embodiment, the hydrometallurgical process according to the invention comprises only steps III and IV. In fact, performing step I and step II depends substantially on the properties and conditions of the solid material used, on the basis of which washing and subsequent filtering may be necessary or superfluous. Moreover, steps V and VI enable process performance to be improved in terms of consumption of reagents and fresh water, but they are not indispensable for the purposes of an optimum recovery of the indium contained in the starting material.

In yet another embodiment, the solid residue obtained from step III (acid leaching) is subjected to an additional acid leaching to solubilize the tin contained in said ITO (Indium-Tin-Oxide) glass and subsequently recover said tin by selective precipitation or electrolysis. The aforesaid additional acid leaching is performed at ambient temperature for a time of 1-3 hours and by using an aqueous solution of sulphuric acid 1-3 M as a leaching solution.

The solid material to be treated is subjected to acid leaching in accordance with step III to solubilize the indium (In) by using an aqueous solution (leaching solution) containing sulphuric acid (H₂SO₄).

In one embodiment, the concentration of the reagent (sulphuric acid) used in the aforesaid leaching step is within the range 0.05-0.5 M.

The washing step (step I) is performed at a concentration of the solid material that is equal to 15-30% of the volume of the washing liquid for a time of 1 hour. The acid leaching step (step III) is performed at a concentration of the solid material that is equal to 5-25% or to 10-20% of the volume of the leaching solution, for a time of 1-3 hours, at a temperature in the range 40-90°C and at atmospheric pressure. The acid leaching step is performed under stirring or without stirring, depending on the dimensions of the particles forming the treated solid material. At the end of the leaching reaction, filtering is performed.

The leaching of indium occurs according to the following chemical reaction:

In₂O₃ +3H₂SO₄ → In₂(SO₄)₃+ 3H₂O (1)

The above disclosed leaching can be performed just once (single stage) or be repeated several times, thus in multiple stages, so as to extract most of the indium present in the solid material. If the leaching is repeated several times, the various stages can be connected together with cross currents or by counter current.

Replenishing the consumed reagent is provided for each stage, so as to maintain the concentration at the optimum value. The reagent is replenished on the basis of the consumption thereof in the preceding stage. Generally, the reagent (sulphuric acid) is replenished according to the following quantities, expressed as a % range of the initial dosage: 10-50%.
At the end of the last leaching stage, the exiting leaching solution is filtered, by using a bag filter, a press filter or a cartridge filter depending on the type of treated solid material and the type of reactor used. The residual solid material is then washed with water. The extraction yield obtained at the end of the various leaching stages is greater than 99%.

The washing water can be recovered and used for the subsequent leaching stages or to treat a new solid material in step III after appropriate replenishment, or it can be used for washing the solid material in step I.

The leaching solution obtained from step III is sent to an electrolysis cell, as disclosed in step IV, for the recovery of the metallic indium at the cathode (electrodeposition).

The reactions that occur during the electrolysis are as follows:

*In*³⁺ *+* 3*e*⁻ → *In*⁰ (2)

2 H⁺ + 2*e*⁻ → H₂ (3)

In order to optimize the indium recovery yield, the purity of the final product and the energy efficiency of this process step, numerous parameters have to be considered. In particular, it has been seen that current density, material of the electrodes, distance between the electrodes, (electrodeposition) voltage, stirring of the solution are of significant importance for the above listed results. The cathode material is selected in such a way as to ensure that deposited indium remains in metal state, avoiding partial oxidations.

Several suitable materials can be used for the cathode, such as for example indium, graphite, stainless steel, titanium and copper. For the anode, it is possible to use a graphite or titanium electrode. Electrolysis has to be performed by ensuring good stirring of the solution, so as to decrease the thickness of the limit layer near the electrodes and promote an increase in the current flow.

In one embodiment, the current density is 20-100 A/m².

In one embodiment, the electrodeposition voltage is set in a range of 1.5 - 3.0 V.

In one embodiment, the solution is subjected to stirring at 250 rpm. In another embodiment, a pump of known type is used to enable the solution to recirculate and the electrodes to be traversed.

The indium recovery yield through the process according to the invention is greater than 99%, with purities that are also greater than 99.9% depending on the treated starting material.

Considering the leaching and electrolysis steps, an overall indium recovery yield is obtained that is greater than 95%.

The hydrometallurgical process according to the invention is highly advantageous, because the electrolysis enables the indium to be recovered in the metal form thereof and the sulphuric acid consumed during the leaching step to be partially regenerated. Owing to the partial regeneration of the sulphuric acid, performed in step IV, a high percentage (50-80%) of the solution exiting the electrolysis cell can be used for a new cycle on a waste material to be treated. Furthermore, the leaching solution that is recovered at the end of step IV (solution exiting the electrolysis cell ) and not reused (20-50%), together with the washing liquid (if consisting of water) coming from step II (filtration of the suspension), can be sent to a specific waste water treatment section, which enables the water resulting from this treatment to be reused. In the waste water treatment section, a neutralization (step VI) is performed by adding calcium hydroxide until pH 7-8.5 is reached.

By way of non-limiting example of the invention, the following Examples are disclosed below: selective leaching of indium from ITO glass of liquid crystal displays (Example 1); electrolysis of the indium solution (Example 2); water treatment at the end of electrolysis (Example 3).

### Example 1 - Selective leaching of indium from ITO glass

A quantity of ITO glass that was mechanically processed so as to have a dimension of about 2 cm was immersed inside a leaching solution according to the invention, containing sulphuric acid 0.1 M. The solid material/liquid ratio was 15% w/v. The leaching reaction was conducted at 60°C and atmospheric pressure for 1 hour, under stirring at 250 rpm.

Leaching was repeated for three cross-current or counter-current stages, with replenishment of the quantities of the consumed reagent. At the end of the third leaching stage, the leaching solution was separated through filtration from the residual solid material and the latter was washed with water, by using a volume of water equal to 20% of the leaching solution.

The final leaching solution and the washing water were analyzed to determine the concentration of indium. The obtained indium recovery yield was greater than 99%.

### Example 2 - Electrolysis of the indium solution

An electrolysis test was performed for recovering indium ions that were previously solubilized owing to the use of a leaching solution according to the invention. In particular, a leaching solution with an indium concentration equal to 150 mg/L was introduced into an electrolysis cell. A cathode was used consisting of a bar of graphite and an anode consisting of a bar of graphite or titanium coated in rare earth oxides. The voltage was set at 2.5 V and a current density of about 50 A/m² was recorded. The recovery of indium as metallic indium was greater than 90% after 3 hours and greater than 99% after 4 hours.

### Example 3 - Water treatment at the end of electrolysis

The solution from which the indium was recovered by electrolysis (Example 2) was used to perform a water treatment test in order to obtain water with qualitative features such that it can be reused for washing residual solids after leaching and/or as service water.

A neutralization reaction with calcium hydroxide (10% w/v) was conducted until pH 7.5 was reached. The test was carried out at ambient temperature, at atmospheric pressure under stirring at 250 rpm. The consumption of calcium hydroxide until pH 7.5 was reached was 56 kg/m³. The suspension was then filtered so as to obtain treated water with features that are suitable for reuse and calcium sulphate and calcium hydroxide sludges to be disposed of.

The quantity of sludges produced is 180 kg/m³ with 60% humidity. The treated water has the following features: pH 7.5, COD (Chemical Oxygen Demand) 247 mg/L, In 0.5 mg/L, Sn < 0.1 mg/L, trace sulphates.

From what has been disclosed and exemplified previously, it can be stated that the hydrometallurgical process according to the invention enables the drawbacks to be effectively overcome that are found in known methods for the selective recovery of indium from waste materials.

Variations on and/or additions to what has been disclosed above are moreover possible. In particular, the hydrometallurgical process according to the invention was implemented on the laboratory scale and on the pilot plant scale.

### BIBLIOGRAPHY

CN115418501A "Method for recovering metal indium from waste ITO glass" Wang, Y.; Sun, Z.; Ma, K.; Wang, B.; Huang, W. (2022).
CN107513619A "Method for recovering indium and tin in ITO glass waste materials" Tian, Q.; Liu, Z.; Guo, X.; Li, D. (2017).
CN109517991A "Method for recycling metal indium in waste liquid crystal screen" Liu, B.; Zhang, S. (2019).
CN108277354A "Method for leaching indium in ITO glass substrate through oxalic acid" Zhu, N.; Cui, J.; Liu, B.; Wu, P. (2018).

## Claims

1. Hydrometallurgical process for the selective recovery of indium from a solid waste material, said solid waste material deriving from ITO (Indium-Tin-Oxide) glass of liquid crystal displays of end-of-life devices, said process comprising the following steps:
- Subjecting said solid material to acid leaching to dissolve said indium by using a leaching solution, said leaching solution being an aqueous solution of sulphuric acid (H₂SO₄), wherein said subjecting to acid leaching is carried out in single stage or in multiple stages; filtering the exiting leaching solution and subjecting the residual solid material to a washing with water;
- Subjecting said exiting leaching solution to electrolysis to recover said indium as metallic indium at the cathode and regenerate said sulphuric acid; recovering said leaching solution at the end of said electrolysis.

2. Hydrometallurgical process according to claim 1, wherein the concentration of said sulphuric acid in said leaching solution is 0.05-0.5 M.

3. Hydrometallurgical process according to claim 1 or 2, wherein said subjecting to acid leaching is carried out at a temperature of 40-90 °C.

4. Hydrometallurgical process according to any one of claims 1 to 3, wherein said subjecting to acid leaching is carried out at atmospheric pressure.

5. Hydrometallurgical process according to any one of claims 1 to 4, wherein said subjecting to acid leaching is carried out for a time of 1-3 hours.

6. Hydrometallurgical process according to any one of claims 1 to 5, wherein said subjecting to acid leaching is carried out under stirring.

7. Hydrometallurgical process according to any one of claims 1 to 6, wherein, when said subjecting to acid leaching is carried out in multiple stages, said multiple stages are connected to each other with crossed currents or by countercurrent.

8. Hydrometallurgical process according to any one of claims 1 to 7, wherein said subjecting to acid leaching is carried out at a concentration of said solid material that is equal to 5-25% of the volume of said leaching solution.

9. Hydrometallurgical process according to any one of claims 1 to 8, wherein, in said subjecting to electrolysis, an electrodeposition voltage of 1.5 - 3.0 V and a current density of 50 - 200 A/m² are used.

10. Hydrometallurgical process according to any one of claims 1 to 9, wherein said subjecting to electrolysis comprises using a cathode made of a material selected from the group consisting of graphite, indium, stainless steel, titanium and copper.

11. Hydrometallurgical process according to any one of claims 1 to 10, wherein, before said subjecting to acid leaching, said solid material is subjected to washing with a washing liquid for removing any residues of liquid crystals from said ITO (Indium-Tin-Oxide) glass and recovering said any residues of liquid crystals in a suspension of said washing liquid, wherein said washing liquid consists of water or an organic solvent.

12. Hydrometallurgical process according to claim 11, wherein said washing is carried out at a concentration of said solid material that is equal to 15-30% of the volume of said washing liquid.

13. Hydrometallurgical process according to claim 11 or 12, comprising filtering said suspension and recovering said washing liquid.

14. Hydrometallurgical process according to any one of claims 1 to 13, comprising reusing 50% to 80% of said leaching solution recovered at the end of said electrolysis for subjecting a new solid waste material to acid leaching.

15. Hydrometallurgical process according to claim 14, comprising replenishing said recovered leaching solution by adding 10% to 50% of sulphuric acid compared to the dosage of said sulphuric acid in said leaching solution used during said subjecting said solid material to acid leaching.

16. Hydrometallurgical process according to any one of claims 1 to 15, comprising using a base for neutralizing said leaching solution recovered at the end of said electrolysis, so as to obtain water that is usable for preparing a new leaching solution and/or as washing water.

17. Hydrometallurgical process according to any one of claims 13 to 16, comprising using a base for neutralizing said washing liquid recovered after said filtering, when said washing liquid consists of water, so as to obtain water that is usable for preparing a new leaching solution and/or as washing water.

18. Hydrometallurgical process according to any one of claims 1 to 17, wherein said solid material subjected to said acid leaching is further subjected to an additional acid leaching for solubilizing tin contained in said ITO (Indium-Tin-Oxide) glass and subsequently recovering said tin through selective precipitation or electrolysis, said additional acid leaching being carried out at ambient temperature for a time of 1-3 hours and by using an aqueous solution of sulphuric acid 1-3 M as a leaching solution.

19. Hydrometallurgical process according to any one of claims 1 to 18, comprising mechanically processing said waste solid material so as to reduce said solid waste material to granules and/or powders.

20. Hydrometallurgical process according to claim 19, wherein said granules and/or powders have a granulometry of 0.5 mm - 3 cm.
